# EUROPEAN PATENT SPECIFICATION

(11) **EP 1 840 716 B1**
(45) Date of publication and mention of the grant of the patent: **29.11.2017**
(21) Application number: 06025696.3
(22) Date of filing: 12.12.2006
(51) Int. Cl.: G06F 3/048

(54) **Display data size adjustment apparatus and method for portable terminal**
Vorrichtung zur Anpassung der Anzeigedatengröße und Verfahren für ein tragbares Endgerät
Procédé et appareil de réglage de la taille des données affichées pour un terminal portable

(30) Priority: 30.03.2006 KR 20060028739
(43) Date of publication of application: 03.10.2007
(73) Proprietor: Samsung Electronics Co., Ltd., Suwon-si, Gyeonggi-do, 443-742 (KR)
(72) Inventor: Kim, Dong Sub, Gumi-si, Gyeongsangbuk-do (KR); Kim, Dong Woo, Suseo-gu Daegu Metropolitan City (KR); Kim, Soon Jin, Suseog-gu Daegu Metropolitan City (KR); Lee, Dong Jin No. 102-603, Woobang Sincheonji, Chilgok-gun, Gyeongsanbbuk-do (KR)
(74) Representative: Nederlandsch Octrooibureau

(56) References cited:
- WO-A2-01/61444
- GB-A- 2 344 037
- US-B1- 6 570 583

## Description

### BACKGROUND OF THE INVENTION

### Field of the Invention:

The present invention relates generally to an apparatus and method to provide an added service for a portable terminal. More particularly, the present invention relates to an apparatus and method for a portable terminal wherein user data may be displayed in an enlarged or reduced size.

### Description of the Related Art:

Advances in wireless communication technologies have increased the popularity of portable terminals. Communication network operators provide various services in order to satisfy diversified needs of subscribers.

For example, a portable terminal performs a basic call processing function that facilitates a subscriber's ability to place/receive a phone call to/from another fixed or mobile subscriber while in motion in a service area of a base station. Such a portable terminal can also perform added functions enabling personal information management and data exchange through connection to a computer or to an Internet network. In particular, an advanced portable terminal can perform transmission and reception of pictures or moving images, support virtual three-dimensional sounds or stereo sounds, play Moving Picture Experts Group's MPEG-1 Audio Layer 3 (MP3) files, and include a camera for photographing. Various content services such as a data service are also provided to portable terminals. Sizes of characters or images displayed on the screen tend to decrease as a result of possible picture size limitations of portable terminals. This lowers a user's comprehensibility.

To increase comprehensibility of the screen, use of a magnifying glass that can be externally installed at a portable terminal has been proposed to enlarge the screen content if necessary. A method for on-screen character enlargement has also been proposed, wherein a font of desired characters is selected using a key for character enlargement and the selected font is read from a font memory to enlarge characters displayed on the screen.

However, in a conventional method of utilizing an external appliance such as a magnifying glass to enlarge screen data, addition of a separate mechanical means may significantly increase the volume of a portable terminal and cause a design change thereof. In another conventional method of utilizing a font memory to store multiple fonts, a large memory capacity is required for a portable terminal and the user is inconvenienced by having to specify sizes of characters.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide an apparatus and method as defined in the appended claims. Another object of an exemplary embodiment of the present invention is to provide an apparatus and method for a portable terminal wherein user data can be displayed in an enlarged or reduced size according to user requests.

Another object of an exemplary embodiment of the present invention is to provide an apparatus and method for a portable terminal wherein sizes of screen display data are adaptively controlled according to types of services involving messages, menus and images.

Another object of an exemplary embodiment of the present invention is to provide an apparatus and method for a portable terminal wherein sizes of characters in a text message can be easily adjusted.

Another object of an exemplary embodiment of the present invention is to provide an apparatus and method for a portable terminal wherein user data displayed on a screen is enlarged or reduced by a ratio and the screen is moved according to user settings, for user convenience.

According to an exemplary embodiment of the present invention, a display data size adjustment method for a portable terminal is provided. Requested user data is displayed on a screen of the portable terminal in response to a request from a user. The displayed user data is enlarged or reduced by a preset enlargement or reduction ratio in response to a key event for enlargement or reduction. The enlarged or reduced user data is displayed.

According to another exemplary embodiment of the present invention, a display data size adjustment method for a portable terminal is provided. Requested user data is displayed on a screen of the portable terminal in response to a request from a user. If a key is input, a determination is made as to whether an enlargement/reduction mode is set. If the enlargement/reduction mode is set, a key event associated with the input key is identified. If the key event is a request for enlargement, the displayed user data is enlarged by a preset enlargement ratio and the enlarged user data is displayed on the screen. If the key event is a request for reduction, the displayed user data is reduced by a preset reduction ratio and the reduced user data is displayed on the screen.

According to another exemplary embodiment of the present invention, a display data size adjustment apparatus for a portable terminal is provided. A key input unit comprises numeric, character and function keys, a controller and a display unit. The numeric, character and function keys facilitate a user's input of numeric and character information and allow a user to set various functions. The key input unit generates key events associated with those function keys that are for the enlargement or reduction of user data displayed on a screen and movement of the screen. If a signal to change a mode related to data enlargement or reduction is input from the key input unit, the controller controls the setting of a corresponding enlargement/reduction mode. If data enlargement or reduction events and associated screen movement events occur, the controller also controls operations related to the events. The display unit displays user data on the screen under the control of the controller in relation to data enlargement/reduction and screen movement, a window to run and set applications performing data enlargement/reduction operations, and a mode setting guide message under the control of the controller.

WO 01/61444 A2 is related to a mobile telephone man machine interface (MMI) in which icons are displayed on a display together with text explaining the meaning of a single "active" icon. The "active" icon, representing a function which can actually be selected or initiated, is the only icon with accompanying text. This represents an advance over conventional text based MMIs which many people find difficult to learn, to navigate and are inelegant. Where an icon is displayed together with its associated text, then a user rapidly understands the function to be performed by selecting that icon and also that the status of the computing means (typically a microprocessor) is such that the function can either be performed directly or can be readily navigated to. The text is contained within a cartoon style balloon.

WO 01/61444 A2 further relates to a zoom function by which a user can cause the size of the icon and/or the word or words explaining the function of that icon displayed on the display to be altered. The zoom function is controlled by a volume up and a volume down button. The zoom function may alter in dependence on the selected mode or function of the mobile telephone to give one or more zoom settings optimized for the selected mode or function. For example, when editing text, the zoom can magnify an amount that is most relevant to seeing text clearly (and multiple zoom settings can be provided and accessed through multiple nudges of the zoom button). A different zoom amount may be appropriate for zooming into the normal icon based menus, and another for zooming into text only menus.

Patent publication US657058 discloses a hand held device comprising a display for displaying user data. The displayed information may be zoomed by the user. The display is used to display both text and iconic information.

### BRIEF DESCRIPTION OF THE DRAWINGS

The above and other exemplary objects, features and advantages of certain exemplary embodiments of the present invention will be more apparent from the following detailed description taken in conjunction with the accompanying drawings, in which:
FIG. 1 illustrates a configuration of a portable terminal according to an exemplary embodiment of the present invention;
FIG. 2 illustrates a series of character size adjustment operations in the portable terminal of FIG. 1;
FIG. 3 illustrates another series of character size adjustment operations in the portable terminal of FIG. 1;
FIG. 4 illustrates another series of character size adjustment operations in the portable terminal of FIG. 1;
FIG. 5 illustrates a series of menu size adjustment operations in the portable terminal of FIG. 1;
FIG. 6 illustrates a series of image size adjustment operations in the portable terminal of FIG. 1;
FIG. 7 illustrates another series of image size adjustment operations in the portable terminal of FIG. 1;
FIG. 8 is a flow chart illustrating a method to enlarge or to reduce displayed user data in response to key events for the portable terminal of FIG. 1;
FIGS. 9A and 9B are flow charts illustrating detailed steps of the method of FIG. 8;
FIG. 10 is a flow chart illustrating steps to display user data according to preset data display formats;
FIG. 11 is a flow chart illustrating steps to move a screen according to preset screen movement schemes; and
FIG. 12 is a flow chart illustrating steps of a method to adjust sizes of characters during text message transmission and reception for the portable terminal of FIG. 1.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

An exemplary embodiment of the present invention relates to an apparatus and method capable of delivering added functions and services to a portable terminal for user convenience. In exemplary embodiments of the present invention, an apparatus and method for a portable terminal are provided in which user data can be displayed in an enlarged or reduced size according to user requests.

According to an exemplary embodiment of the present invention, in a short message service (SMS) that is an added function of a portable terminal, displayed characters are enlarged or reduced through function keys of the portable terminal. While the user inputs characters or reads a received message in an SMS service, if a particular event is generated through an associated function key, the portable terminal increases or decreases sizes of characters displayed on the screen. This example is applicable for all kinds of user data usable through a portable terminal, including characters, images, moving pictures and menus.

Exemplary embodiments of the present invention relate to an apparatus and method to enlarge or reduce screen content of a portable terminal according to user requests. Enlargement/reduction of screen content in response to user requests improves user comprehensibility of displayed characters or images.

In an exemplary embodiment of the present invention, user data includes character data such as menus and text, and multimedia data such as images and moving pictures, in the delivery of, for example, SMS services and multimedia message services (MMS).

According to another exemplary embodiment, for transmission or reception of characters using a portable terminal in an SMS or MMS service, sizes of displayed characters are easily adjusted through function keys of the portable terminal, for example volume keys, to facilitates the user's ability to readily comprehend the text. That is, sizes of displayed characters are increased corresponding to occurrences of events associated with, for example, the up volume key, and are decreased corresponding to occurrences of events associated with, for example, the down volume key.

The screen is moved up/down/left/right using function keys, such as direction keys, to make the overall enlarged user data visible so that the user data can be readily understood by the user. This enhances a user's convenience.

According to another exemplary embodiment of the present invention, when displayed characters in an SMS or MMS service are enlarged or reduced, characters are automatically rearranged corresponding to changes in character size, thereby enhancing user convenience.

For example, in the case in which text does not fit within the screen due to character enlargement, those characters no longer visible within a line are identified and characters are rearranged in lines through, for example, an auto line feed feature. That is, those characters no longer visible within a line of the screen are automatically moved to the next line, and the text is made easily visible. The entire text is made visible through movement to the next page using keys, for example up and down keys, or through a scrolling feature.

As described above, in the display data enlargement/reduction method of an exemplary embodiment of the present invention, a separate external appliance is not required; fonts of multiple character sizes do not have to be stored, leading to highly effective memory utilization; and character sizes can be adaptively controlled. Hereinafter, exemplary embodiments of the present invention are described with reference to the accompanying drawings.

Although, for the purpose of description, a mobile communication terminal is described as an example of a mobile terminal of an exemplary embodiment of the present invention. Exemplary embodiments of the present invention are not limited to a mobile communication terminal. The mobile terminal of an exemplary embodiment of the present invention is a terminal provided for user convenience, and may be any information and communication appliances and multimedia appliances, such as a mobile communication terminal, mobile phone, wired phone, wireless phone, personal digital assistant (PDA), smart phone, audio player, MP3 player, notebook, and personal computer. The mobile terminal may also be applied to applications using such appliances.

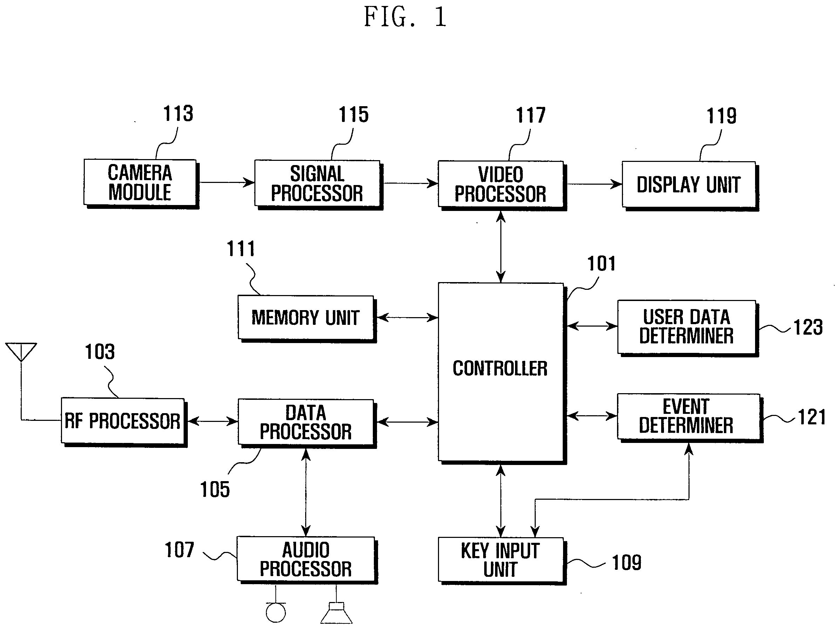

FIG. 1 is an illustration of an example configuration of a portable terminal according to an exemplary embodiment of the present invention.

Referring to FIG. 1, the portable terminal comprises an input means, a processing means, a storage means, an output means, and a communication means.

The input means acts to input multimedia data composed of audios, numerals/characters and images, and includes an audio processor 107, a key input unit 109 and a camera module 113.

The processing means processes user data of voices, numerals/characters and images input through the input means, and performs operations necessary to handle added functions requested by the user. The processing means includes a signal processor 115, a video processor 117, a data processor 105, and a controller 101.

The storage means stores user data input through the input means, and applications to realize added functions of the mobile terminal. The storage means includes a memory unit 111.

The output means outputs user data input through the input means, user data and related data stored in the storage means, and screen data associated with added functions. The output means includes a display unit 119 and an audio processor 107.

The communication means performs wireless transmission of user data to another user, and connects to an external Web server to transmit/receive contents. The communication means includes a radio frequency (RF) processor 103 and an antenna.

To be more specific about each component, the RF processor 103 performs communication operations related to phone calls, SMS or MMS services and data communications. The RF processor 103 includes an RF transmitter for upconverting the frequency of a signal to be transmitted and amplifying the signal, and an RF receiver for low-noise amplifying a received signal and downconverting the frequency of the signal.

The data processor 105 processes voice data from the audio processor 107 and numeric/character data input by the user through the key input unit 109. The data processor 105 may include a means for encoding and modulating a signal to be transmitted through the RF processor 103, and a means for demodulating and decoding a signal received through the RF processor 103.

The audio processor 107 reproduces an audio signal from the data processor 105, and transmits an audio signal such as a voice signal input from a microphone to the data processor 105.

The key input unit 109 includes numeric, character and function keys for inputting numeric and character information and for setting various functions. In particular, the function keys include volume keys, direction keys and associated mapped keys for data enlargement/reduction and screen movement through the display unit 119.

The memory unit 111 may include a program memory and a data memory. The program memory stores control programs for controlling the overall operation of the portable terminal, and application programs for data enlargement/reduction and screen movement.

The data memory stores data resulting from execution of the control and application programs, information to set functions related with enlargement/reduction of displayed user data, and a database for managing various data in the form of records.

The programs for enlarging, reducing and moving displayed user data can be loaded as special-purpose applications, and include program modules for detecting and identifying key events related with enlargement/reduction commands for user data displayed through the display unit 119 and associated move commands, program modules for controlling enlargement/reduction of the user data in response to the key events, program modules for controlling movement of the user data in response to key events occurring after data enlargement/reduction, and program modules for notification of results generated from user event processing operations.

The controller 101 controls the overall operation and internal components of the portable terminal. In response to input of a mode change signal related to data enlargement/reduction through the key input unit 109, the controller 101 controls a corresponding mode setting operation. In response to input of signals associated with data enlargement/reduction and subsequent screen movement through the key input unit 109, the controller 101 controls corresponding operations. For example, when events associated with data enlargement/reduction occur through the key input unit 109, the controller 101 controls corresponding operations to enlarge/reduce user data displayed through the display unit 119 in response to the events. When events occur after screen image enlargement/reduction, the controller 101 controls movement of the enlarged/reduced user data. In response to input of a mode setting signal, the controller 101 also controls corresponding added functions and output of managed user data or created guide messages.

Upon reception of information from the user, the controller 101 determines whether a corresponding service mode is activated or deactivated, identifies an input event under the condition of the determined service mode state, and controls data enlargement/reduction and screen movement according to the identified input event.

Specifically, in an activated state of an enlargement/reduction mode, the controller 101 identifies an input key event. If the identified key event indicates data enlargement, the controller 101 controls enlargement of displayed user data by a specified ratio. If the identified key event indicates data reduction, the controller 101 controls reduction of displayed user data by a specified ratio. If the identified key event indicates screen movement, the controller 101 controls movement of the screen in a specified direction.

In a deactivated state of the enlargement/reduction mode, the controller 101 identifies an input key event, and controls operations necessary to handle the key event. For example, if the input key event indicates volume up/down, the controller 101 controls a corresponding volume up/down operation.

Although, in the description above, the controller 101 controls data enlargement/reduction in response to key events, the controller 101 may also control automatic data enlargement/reduction according to preset mode settings.

For example, the user can set in advance an enlargement/reduction ratio and time interval for user data, such as incoming SMS data. When SMS data is received and displayed, the SMS data can be automatically enlarged or reduced at the preset enlargement/reduction ratio from the beginning of the preset time interval, and be automatically restored to the initial size at the end of the time interval.

Various enlargement/reduction mode settings can be specified according to user selections. In particular, various sized screen data can be provided for the convenience of users who may be elderly or who may have poor sight.

The user data may be any type of data handled by the portable terminal, such as a phone number of a called party input through the key input unit 109, transmission/reception data of an SMS, MMS or electronic mail service, data related to a data communication connection, a photograph taken by the camera module 113, menu or user interface data, and multimedia data including an icon, image and moving picture.

The camera module 113 photographs a target object and outputs image or video data. The signal processor 115 converts image or video data from the camera module 113 into a digital signal for further processing.

The video processor 117 generates screen data to display a digital signal from the signal processor 115 and to display user data changed by enlargement/reduction operations of an exemplary embodiment of the present invention. Under the control of the controller 101, the video processor 117 outputs screen data associated with a received digital image signal or with enlargement/reduction/movement of user data depending upon service mode settings to the display unit 119 in a format consistent with specifications of the display unit 119. The video processor 117 also compresses and decompresses video data.

The display unit 119 displays video data from the video processor 117 on a screen. The display unit 119 also adaptively displays the user data enlarged/reduced/moved according to the control of the controller 101. The display unit 119 further displays windows for running or setting application modules performing data enlargement/reduction, and mode setting guide messages provided from the controller 101.

The portable terminal further comprises an event determiner 121 for identifying key events input through the key input unit 109, and a user data determiner 123 for examining user data displayed through the display unit 119.

The event determiner 121 determines whether the enlargement/reduction mode is set. If the enlargement/reduction mode is set, the event determiner 121 identifies an event signal input through the key input unit 109, and transmits identified information on the event signal to the controller 101.

The user data determiner 123 identifies types of currently displayed user data, and transmits the identified types to the controller 101 so that the controller 101 can control data enlargement/reduction and associated screen display based on the data type information. For example, if currently displayed user data is character data such as SMS data, the user data determiner 123 transmits character type information to the controller 101, which facilitates control of data enlargement/reduction and associated screen display in a manner consistent with character type data.

In particular, if currently displayed user data is character data containing an emoticon, such as SMS data, the user data determiner 123 transmits emoticon type information to the controller 101 to facilitate the control of data enlargement/reduction and associated screen display according to emoticon type data. As a result, it is possible to prevent deformation of the emoticon due to enlargement/reduction.

For enlargement/reduction of specialized user data, the type of the user data is identified in advance through, for example, the user data determiner 123, and screen display during enlargement/reduction is adaptively controlled according to the identified data type. For example, a window can be displayed to request the user to select screen display schemes to be used during enlargement/reduction of specialized user data.

Alternatively, the user data determiner 123 can be set to automatically identify the type of user data such as a character or emoticon. For example, if an emoticon is input, the user data determiner 123 identifies the emoticon and transmits the emoticon type to the controller 101. The controller 101 then controls screen display of the emoticon according to a preset display scheme so that the emoticon is not deformed during enlargement/reduction.

If the display unit 119 of the portable terminal includes a touch screen, displayed user data can be enlarged/reduced through the display unit 119. The user generates events for enlargement/reduction of user data displayed on the display unit 119 through pressing function keys, and touches or drags a desired area of the display unit 119 to enlarge/reduce the corresponding user data.

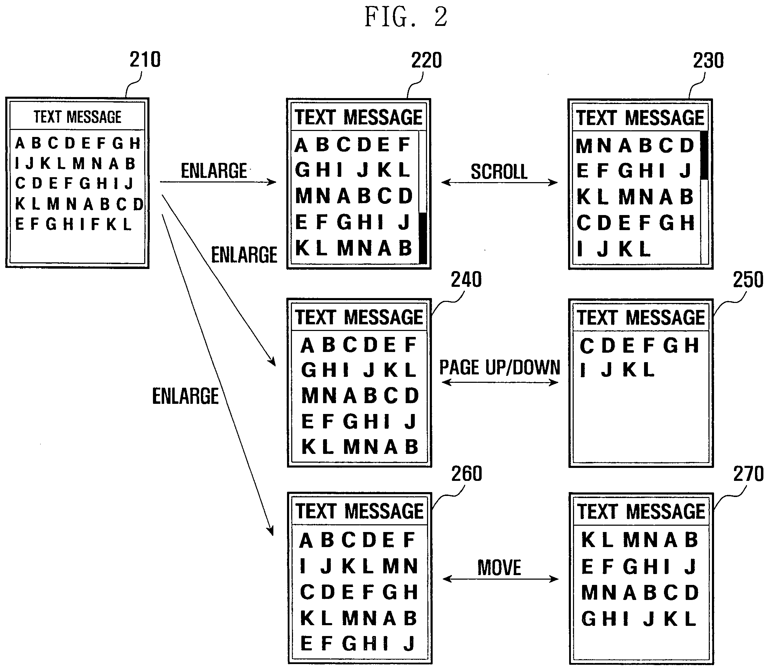

FIG. 2 illustrates a series of character size adjustment operations in the portable terminal of FIG. 1. Display screen representations of FIG. 2 illustrate character enlargement operations involving screen movement in viewing, such as a text message to be transmitted or received through an SMS service.

In FIG. 2, during display of an initial screen 210, when a key event for enlargement is input from the user, the portable terminal enlarges characters on the screen 210 by a ratio, and displays one of screens 220, 240 and 260 with enlarged characters depending upon preset display mode settings.

In an enlargement mode of the screen 220, characters of a line outside the screen width due to enlargement are sequentially moved to the next line. The user can view those characters out of the display area through scrolling operations by pressing function keys of the portable terminal.

For example, if the user presses a scroll key, the portable terminal scrolls the screen downwards and displays the characters out of the display area on a new screen 230. Movement between the screens 220 and 230 is adaptively performed according to scroll up and down operations.

In an enlargement mode of the screen 240, characters of a line outside the screen width due to enlargement are sequentially moved to the next line, and those characters out of the display area are moved to a new screen page. The user can view the characters out of the display area through page up and down operations by pressing function keys of the portable terminal.

For example, if the user presses a page down key, the portable terminal moves from the screen 240 to the next page (a screen 250) to display the characters out of the display area. Movement between the screens 240 and 250 is adaptively performed according to page up and down operations.

In an enlargement mode of the screen 260, characters outside the display area due to enlargement can be viewed through screen movement operations by pressing function keys of the portable terminal.

For example, if the user presses screen up/down/left/right keys, the portable terminal moves from the screen 260 to a screen 270 to display characters out of the display area. Movement between the screens 260 and 270 is adaptively performed according to screen up/down/left/right operations.

In FIG. 2, the name of a service category in a menu, such as 'text message', is enlarged or moved along characters on the screen in response to corresponding events, it may also be fixed without change depending upon display mode settings. In data enlargement or screen movement, displayed menu item names are changed according to types or formats of user data displayed on the screen.

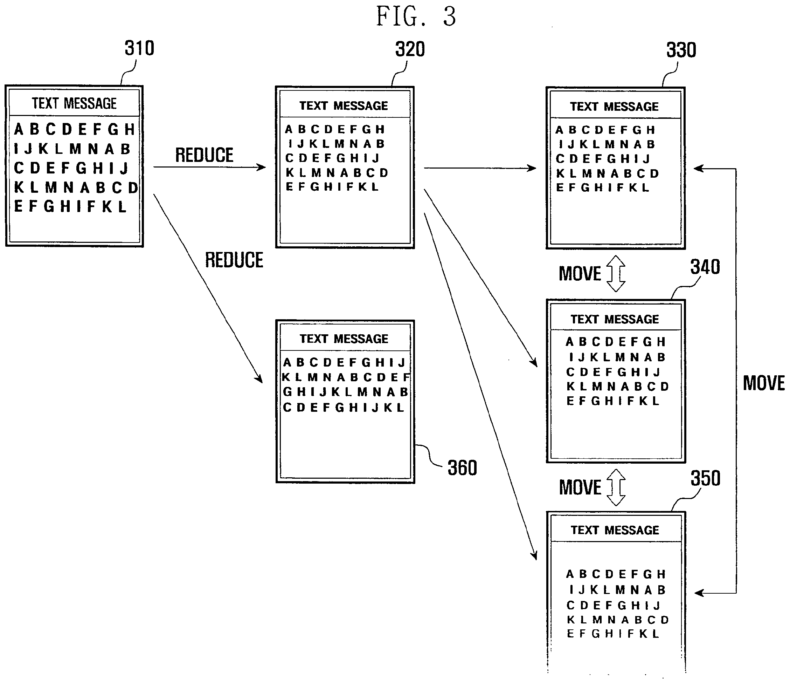

FIG. 3 illustrates another series of character size adjustment operations in the portable terminal of FIG. 1. Display screen representations of FIG. 3 illustrate character reduction operations involving screen movement in viewing, for example, a text message to be transmitted or received through an SMS service.

In FIG. 3, during display of an initial screen 310, when a key event for reduction is input from the user, the portable terminal reduces characters on the screen 310 by a ratio, and displays screen 320 or 360 with reduced characters depending upon preset display mode settings.

In a reduction mode of the screen 320, arrangement of user data in the initial screen 310 is retained irrespective of reduction. Reduction of characters in the screen 320 may result in screen 330, 340 or 350 depending upon the display mode settings.

In the screen 330, characters are reduced with respect to the upper left end of the display unit of the portable terminal. In the screen 340, characters are reduced with respect to the upper central end of the display unit. In the screen 350, characters are reduced with respect to the center of the display unit.

According to an exemplary implementation, instances of the center of reduction in reduction of displayed user data are given above for the purpose of illustration. However, the center of reduction may also be set to various locations of the display unit, for example lower left end, middle left end, lower central end, upper right end, middle right and lower right end according to user preferences.

Movement between the screens 330, 340 and 350 is adaptively performed according to screen movement operations initiated by function keys input from the user.

In a reduction mode of the screen 360, arrangement of user data differs from that of the initial screen 310. That is, characters of the initial screen 310 are rearranged to fill lines of the screen in sequence from the beginning (automatic line rearrangement), as shown in the screen 360. Blank characters inserted by the user for performing functions such as spacing words are preserved in this rearrangement.

Although in FIG. 3 the name of a service category in a menu, for example 'text message', is reduced or moved relative to characters on the screen in response to corresponding events, it may also be fixed without change depending upon display mode settings. In data reduction or screen movement, displayed menu item names are changed according to types or formats of user data displayed on the screen.

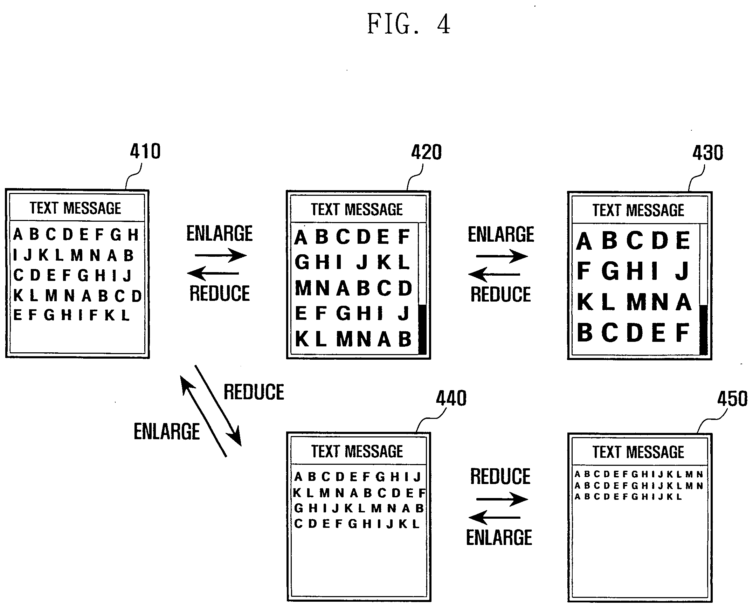

FIG. 4 illustrates another series of character size adjustment operations in the portable terminal of FIG. 1. Display screen representations of FIG. 4 illustrate character enlargement and reduction operations involving screen movement in response to key events in viewing, for example, a text message to be transmitted or received through an SMS service. In particular, characters of a line outside the screen width due to enlargement are sequentially moved to the next line, and those characters out of the display area can be viewed through scrolling operations.

In FIG. 4, during display of an initial screen 410, when a key event for enlargement is input from the user, the portable terminal enlarges characters on the screen 410 by a enlargement ratio, and displays a screen 420 with enlarged characters. Various values may be given to the enlargement ratio depending upon display mode settings.

For example, if the enlargement ratio is set to 1.5, characters in the screen are enlarged 1.5 times in response to a key event for enlargement. If the enlargement ratio is set to 2, characters in the screen are enlarged two times in response to a key event for enlargement. In an exemplary embodiment of the present invention, the enlargement ratio may be set to any value within an enlargement range that the portable terminal supports, for example 1.5, 2, 3 and 4.

When the enlargement ratio is set to 2, characters in the screen are enlarged two times in response to a key event for enlargement, then the enlarged characters are enlarged another two times in response to another key event for enlargement. For example, if a key event for enlargement occurs during display of the screen 420, enlarged characters of the screen 420 are enlarged once again by an enlargement ratio corresponding to the previous enlargement ratio, as shown in a screen 430. Enlargement ratios between corresponding successive key events for enlargement are kept constant.

According to display mode settings, enlargement ratios between corresponding successive key events for enlargement may also be varied, for example, in order of 1.5, 2 and 3 or in order of 2, 4 and 6.

When a key event for reduction occurs during display of the screen 430, characters are reduced by a ratio as shown in the screen 420. When a key event for reduction occurs during display of the screen 420, characters are reduced by a ratio as shown in the screen 410. Size reduction steps correspond in reverse order to size enlargement steps.

In addition, during display of an initial screen 410, when a key event for reduction is input from the user, the portable terminal reduces characters on the screen 410 by a reduction ratio, and displays a screen 440 with reduced characters. Various values may be given to the reduction ratio depending upon display mode settings.

For example, if the reduction ratio is set to 2/3, characters in the screen are reduced by 2/3 in response to a key event for reduction. If the reduction ratio is set to 1/2, characters in the screen are reduced by 1/2 in response to a key event for reduction. In an exemplary embodiment of the present invention, the reduction ratio may be set to any value within a reduction range that the portable terminal supports, for example 2/3, 1/2, 1/3 and 1/4.

When the reduction ratio is set to 1/2, characters in the screen are reduced by 1/2 in response to a key event for reduction, then the reduced characters are reduced by another 1/2 in response to another key event for reduction. For example, if a key event for reduction occurs during display of the screen 440, reduced characters of the screen 440 are reduced once again by a reduction ratio corresponding to the previous reduction ratio, as shown in a screen 450. Reduction ratios between corresponding successive key events for reduction are kept constant.

According to display mode settings, reduction ratios between corresponding successive key events for reduction may also be varied, for example, in order of 2/3, 1/2 and 1/3.

When a key event for enlargement occurs during display of the screen 450, characters are enlarged by a ratio as illustrated in the screen 440. When a key event for enlargement occurs during display of the screen 440, characters are enlarged by a ratio as illustrated in the screen 410. Size enlargement steps correspond in reverse order to size reduction steps.

As described above in relation to FIG. 4, if a key event for enlargement is input through a function key such as the volume up key, during display of a screen, user data displayed on the screen is enlarged. If the volume up key is input during display of the screen, the enlarged user data is enlarged once again. Also, if a key event for reduction is input through a function key, for example the volume down key, during display of a screen, user data displayed on the screen is reduced. If the volume down key is input during display of the screen, the reduced user data is reduced once again.

During display of enlarged or reduced user data on the screen 430 or screen 450, the screen 430 or screen 450 directly returns to the initial screen 410 through a single key event. That is, the screen 430 or screen 450 that is created by enlargement or reduction corresponding to one or more key events can directly return to the initial screen 410 in response to a key event for return without repeated enlargement or reduction.

A function key such as the cancel key, is mapped to the key event of returning to the initial screen. When the cancel key is input during display of enlarged or reduced user data on a screen, the screen directly returns to the initial non-enlarged and non-reduced screen. In addition, if the set enlargement or reduction ratio deviates from an allowed enlargement or reduction range, the screen may automatically return to the initial screen.

Although not shown in FIG. 4, if the display unit of the portable terminal includes a touch screen, displayed user data can be enlarged/reduced through the corresponding touch screen capability. The user activates the enlargement/reduction mode through a function key, then touches a desired area using the touch screen capability or performs a drag operation to enlarge/reduce corresponding user data.

For example, user data displayed on the screen can be enlarged through a drag operation from the upper left end to the lower right end of the screen, or be reduced through a drag operation from the lower right end to the upper left end of the screen.

In user data enlargement/reduction according to an exemplary embodiment of the present invention as illustrated in FIG. 4, the type of displayed user data is identified and the user data is enlarged or reduced based on the identified type. For example, if currently displayed user data is identified to be an emoticon, the user data is enlarged or reduced in a manner relevant to the emoticon type data. For specialized user data such as an emoticon that may be deformed in the process of enlargement or reduction, the type of displayed user data is identified in advance and used to control enlargement/reduction of the user data and subsequent screen movement so as not to deform the displayed user data.

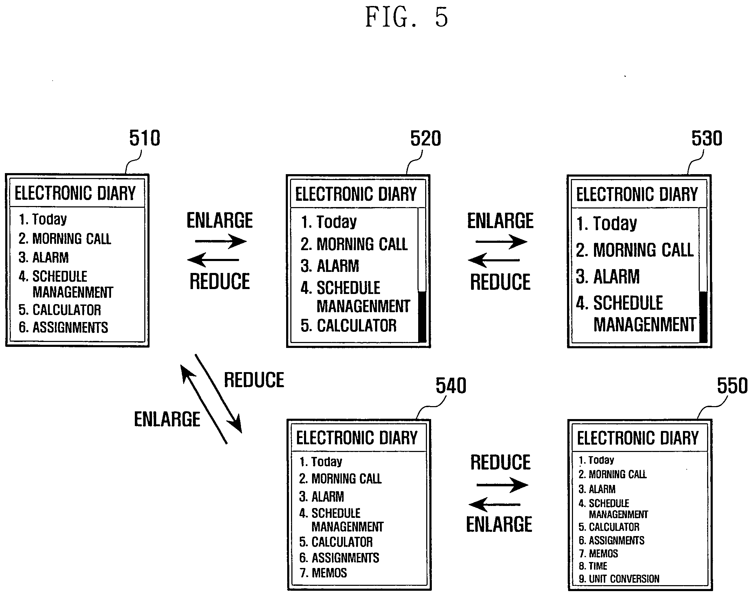

FIG. 5 illustrates a series of menu size adjustment operations in the portable terminal of FIG. 1. FIG. 5 illustrates steps to enlarge and reduce a particular menu of a user interface in response to key events. In particular, user data (menu items) outside the display area due to enlargement can be viewed through up/down/left/right scrolling operations initiated by function keys.

In FIG. 5, during display of an initial menu screen 510, when a key event for enlargement is input from the user, the portable terminal enlarges menu items on the screen 510 by a enlargement ratio, and displays a screen 520 with enlarged menu items. Various values may be given to the enlargement ratio depending upon display mode settings.

When a key event for reduction occurs during display of a screen 530, menu items are reduced by a ratio as shown in the screen 520. When a key event for reduction occurs during display of the screen 520, menu items are reduced by a ratio as shown in the screen 510. Size reduction steps correspond in reverse order to size enlargement steps.

In addition, during display of an initial screen 510, when a key event for reduction is input from the user, the portable terminal reduces menu items on the screen 510 by a reduction ratio, and displays a screen 540 with reduced menu items. Various values may be given to the reduction ratio depending upon display mode settings.

When a key event for enlargement occurs during display of a screen 550, menu items are enlarged by a ratio as shown in the screen 540. When a key event for enlargement occurs during display of the screen 540, menu items are enlarged by a ratio as shown in the screen 510. Size enlargement steps correspond in reverse order to size reduction steps.

Depending upon display mode settings, in a state in which a menu item on which the cursor is located is selected and highlighted as the center of enlargement or reduction, when a key event for enlargement or reduction occurs, menu items on the screen are enlarged or reduced with respect to the selected menu item. That is, a desired center of enlargement or reduction can be specified for user convenience.

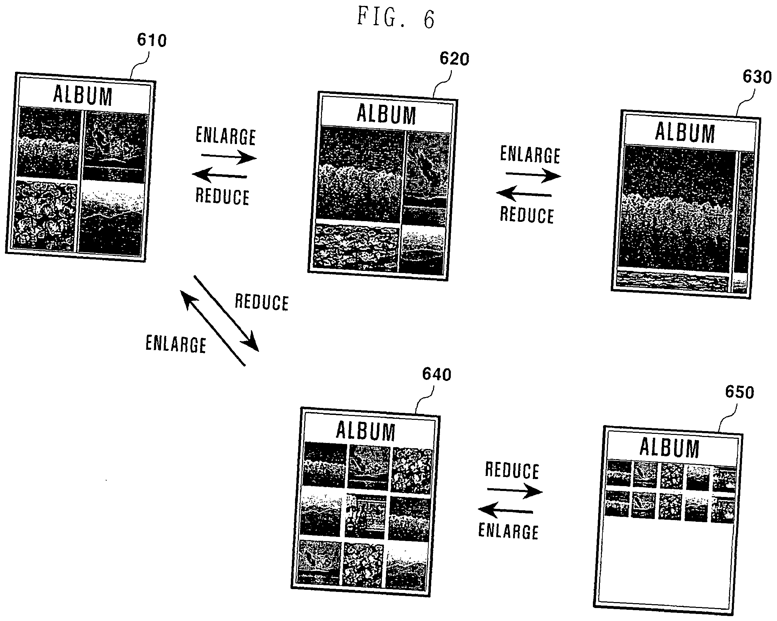

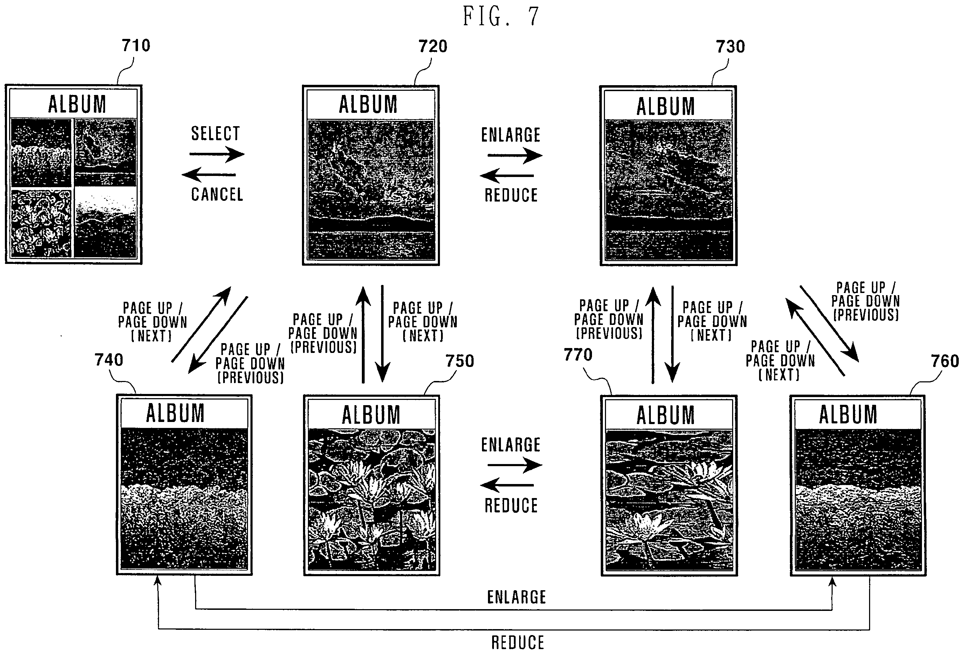

As described above, the data enlargement/reduction method of an exemplary embodiment of the present invention is applied to user data composed of character data utilized in, for example, an SMS, MMS or menu service. The data enlargement/reduction method can also be applied to multimedia data such as images and moving pictures as illustrated in FIGS. 6 and 7. Referring to FIGS. 6 and 7, application of the data enlargement/reduction method to multimedia data is described below. Steps of multimedia data enlargement/reduction are similar to those of character data enlargement/reduction, and are not described in detail.

FIG. 6 illustrates a series of image size adjustment operations in the portable terminal of FIG. 1. FIG. 6 illustrates steps to enlarge and reduce images on the screen in response to key events. In FIG. 6, the user data enlargement/reduction method of an exemplary embodiment of the present invention is applied to a search menu for finding a desired image in a folder.

User data (images) outside the display area due to enlargement may be viewed through up/down/left/right scroll operations initiated by function keys. In reduction of images in response to a key event for reduction, images on the screen are rearranged to fill lines of the screen in sequence from the beginning (automatic line rearrangement).

FIG. 7 illustrates another series of image size adjustment operations in the portable terminal of FIG. 1. FIG. 7 illustrates steps to enlarge and reduce images on the screen in response to key events.

User data (images) outside the display area due to enlargement may be viewed through up/down/left/right screen movement operations initiated by function keys. If a particular image is selected by the user, for example, in an image search menu displayed on a screen 710, the selected image is enlarged or reduced.

Hereinafter, user data enlargement/reduction operations of the portable terminal of an exemplary embodiment of the present invention are described.

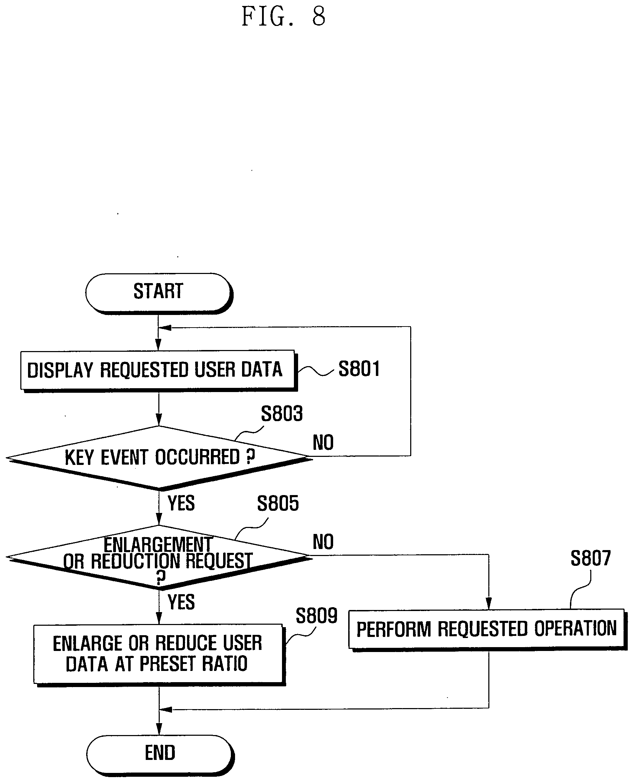

FIG. 8 is a flow chart illustrating a method to enlarge or reduce displayed user data in response to key events for the portable terminal of FIG. 1.

Referring to FIG. 8, the portable terminal displays requested user data on the screen (S801) and determines whether a key event is input from the user (S803). The user data includes all kinds of data that may be handled by the portable terminal, such as multimedia data including menus, images and moving pictures, character data related to text messages transmitted/received through SMS or MMS services, and communication data related to electronic mails.

If a key event is input at step S803, the portable terminal determines whether or not the input key event is a request for enlargement/reduction (S805).

If a key event other than an enlargement or reduction event is input at step S803, the portable terminal performs an operation associated with the input key event (S807). For example, if an SMS function is requested for text message transmission, the portable terminal runs a corresponding application and displays a text input window through the display unit.

If the input key event is determined to be a request for enlargement or reduction at step S805, the portable terminal enlarges or reduces the user data displayed on the screen by an enlargement or reduction ratio set in advance depending upon the input key event (S809).

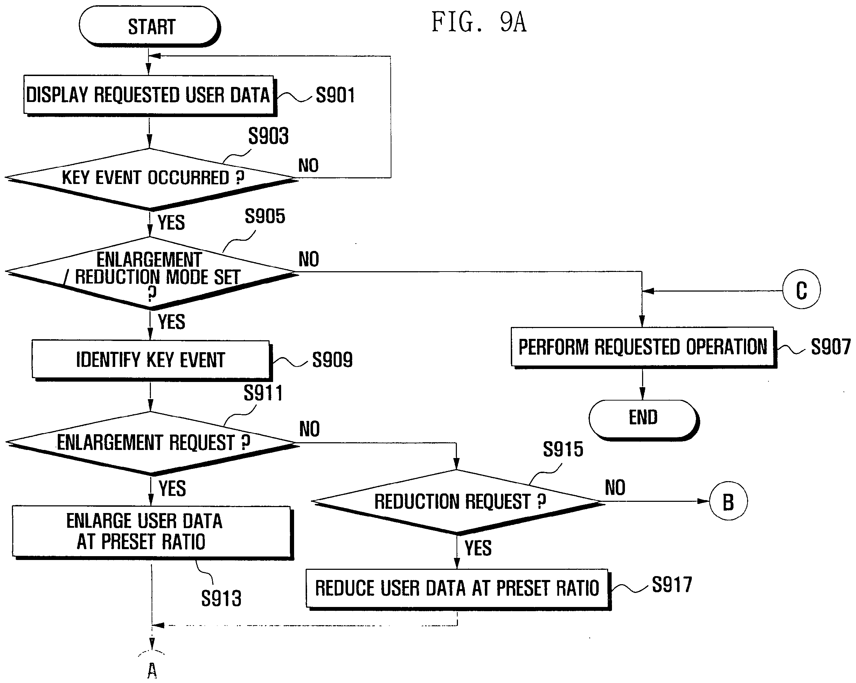

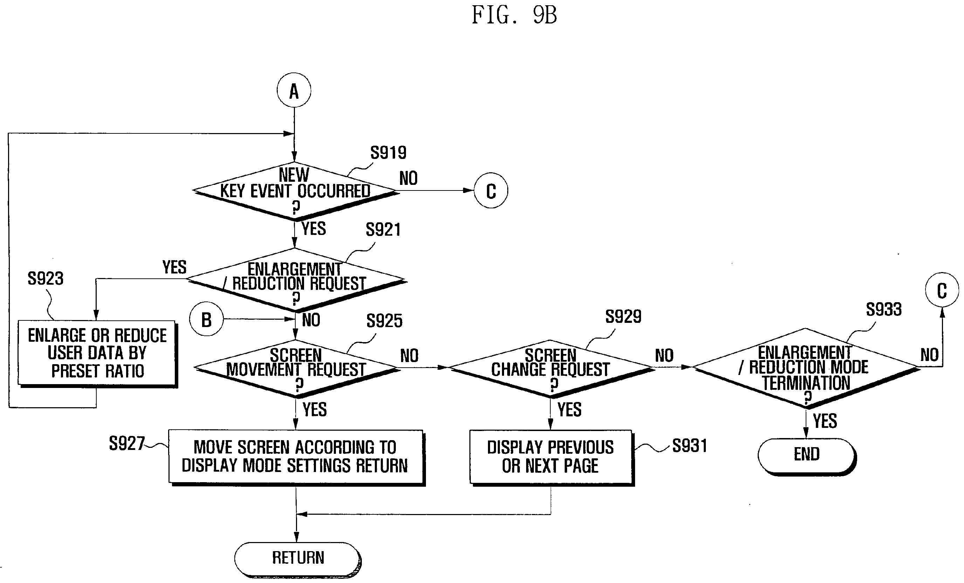

FIGS. 9A and 9B are flow charts illustrating detailed steps of the method of FIG. 8.

Referring to FIGS. 9A and 9B, the portable terminal initially displays requested user data on the screen (S901), and determines whether a key event is input through the key input unit from the user (S903). The user data includes all kinds of data that can be displayed on the screen, such as text data transmitted or received through an SMS function.

If a key event is input at step S903, the portable terminal determines whether an enlargement/reduction mode is set for enlargement or reduction of displayed user data (S905).

If the enlargement/reduction mode is not set, the portable terminal performs an operation associated with the input key event (S907). For example, if a multimedia related operation for image search is requested, the portable terminal runs a corresponding application and displays an image search window through the display unit.

If the enlargement/reduction mode is set at step S905, the portable terminal identifies whether the input key event is a request for enlargement or reduction (S909).

The portable terminal determines whether the input key event is a request for user data enlargement (S911). If the input key event is a request for enlargement, the portable terminal enlarges the displayed user data by a preset enlargement ratio (S913). If the input key event is not a request for enlargement, the portable terminal determines whether the input key event is a request for reduction (S915). If the input key event is a request for reduction, the portable terminal reduces the displayed user data at a preset reduction ratio (S917). Specific methods of displaying user data after enlargement or reduction are described below.

After user data enlargement at step S913 or reduction at step S917, the portable terminal determines whether a new key event is input from the user (S919). If a new key event is input, the portable terminal determines whether the input key event is a request for enlargement or reduction (S921).

If the input key event is a request for enlargement or reduction, the portable terminal enlarges or reduces the displayed user data by a preset enlargement or reduction ratio (S923), and returns to step S919 for further event processing. The user data displayed on the screen is enlarged at step S913 or reduced at step S917 and further enlarged or reduced at step S923. The enlargement and reduction ratios at step S923 correspond to those at steps S913 and S917.

If the input key event is not a request for enlargement or reduction at step S921, the portable terminal determines whether the input key event is a request for screen movement (S925). If the input key event is a request for screen movement, the portable terminal moves the screen in a requested direction according to display mode settings (S927). Specific methods of screen movement after user data enlargement or reduction are described later.

If the input key event is not a request for screen movement at step S925, the portable terminal determines whether the input key event is a request for a screen change (S929). If the input key event is a request for a screen change, the portable terminal displays a previous or next page on the screen (S931). The size of user data displayed on the screen after a screen change corresponds to that of displayed user data before a screen change.

If the input key event is not a request for a screen change at step S929, the portable terminal determines whether the input key event is a request for termination of the enlargement/reduction mode (S933). If the input key event is a request for termination of the enlargement/reduction mode, then the method ends, otherwise the portable terminal performs step S907 for performance of a requested operation.

Although not shown in FIGS. 9A and 9B, the portable terminal preferably restores, in response to a key event for return, the initially displayed user data on the screen directly from enlarged or reduced user data.

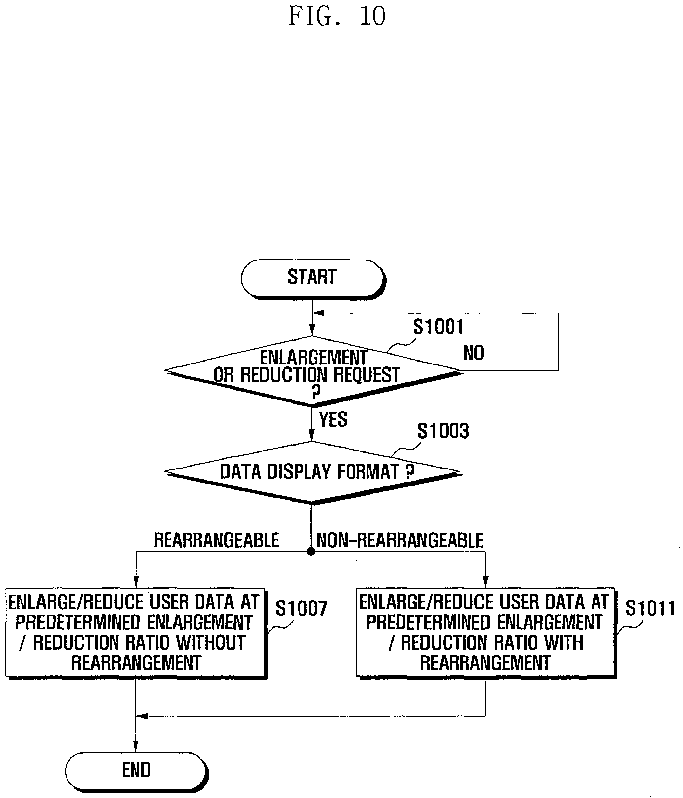

FIG. 10 is a flow chart illustrating steps to display user data according to preset data display formats.

Referring to FIG. 10, the portable terminal determines whether an enlargement/reduction request to enlarge or reduce displayed user data is input (S1001). If an enlargement/reduction request is input, the portable terminal identifies a data display format set in advance (S1003).

If the data display format is set as non-rearrangeable, the portable terminal enlarges or reduces user data displayed on the screen by a enlargement/reduction ratio without rearrangement of the user data (S1007).

If the data display format is set as rearrangeable, the portable terminal enlarges or reduces user data displayed on the screen by a enlargement/reduction ratio with rearrangement of the user data (S1011). Automatic line rearrangement is utilized at step S1011. For example, in enlargement, characters or images of a line outside the screen width due to enlargement are sequentially moved to the next line. In reduction, characters or images on the screen are rearranged so as to fill lines of the screen in sequence from the beginning.

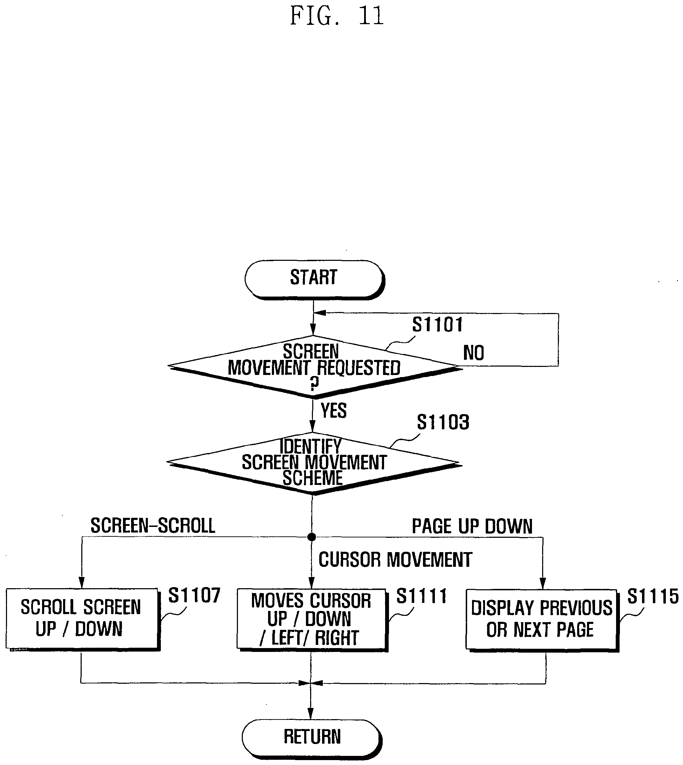

FIG. 11 is a flow chart illustrating steps to move the screen according to preset screen movement schemes.

Referring to FIG. 11, the portable terminal initially determines whether a key event for screen movement is input (S1101). If screen movement is requested, the portable terminal identifies a screen movement scheme set in advance (S1103).

If the screen movement scheme is set to screen-scroll, the portable terminal scrolls the screen up or down depending upon the input key event (S1107).

If the screen movement scheme is set to cursor movement, the portable terminal moves the cursor displayed on the screen in an upward/downward/left/right direction depending upon the input key event (S1111).

If the screen movement scheme is set to page up/down, the portable terminal displays the previous page or next page depending upon the input key event (S1115).

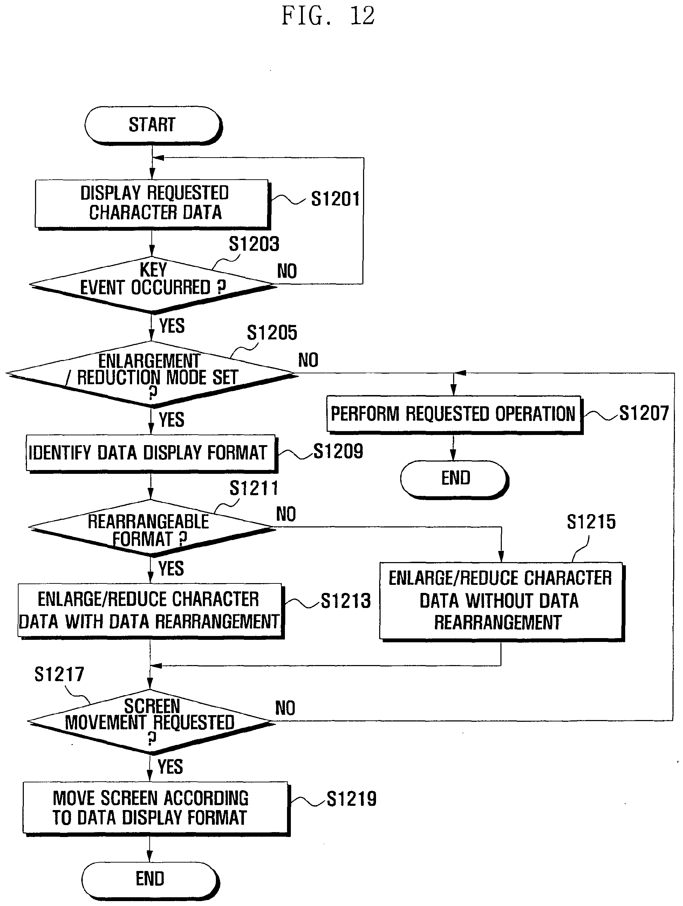

FIG. 12 is a flow chart illustrating a method to adjust sizes of characters during text message transmission and reception using the portable terminal of FIG. 1.

Referring to FIG. 12, the portable terminal displays a requested window containing character data on the screen (S1201), and determines whether a key event is input from the user (S1203). The displayed window is a character window for sending or receiving text data through SMS, MMS or data communication services.

If a key event is input at step S1203, the portable terminal determines whether an enlargement/reduction mode is set for enlargement or reduction of displayed character data (S1205). The character data includes any type of data that can be displayed on the character window, such as text message data transmitted or received through an SMS function.

If the enlargement/reduction mode is not set, the portable terminal performs an operation associated with the input key event (S1207). For example, if a text message transmission is requested, the portable terminal runs a corresponding application and displays a text message transmission window.

If the enlargement/reduction mode is set at step S1205, the portable terminal identifies a data display format set in advance (S1209).

If the data display format is set as rearrangeable (S1211), the portable terminal enlarges or reduces character data displayed on the screen by an associated enlargement/reduction ratio while rearranging the character data through automatic line rearrangement within the size of the screen (S1213). If some characters are outside the display area due to enlargement, a scroll marker or other indicator is displayed to inform of the presence of a next page.

If the data display format is set as non-rearrangeable, the portable terminal enlarges or reduces character data displayed on the screen by an associated enlargement/reduction ratio without rearrangement of the character data (S1215).

If a new request for enlargement/reduction is input from the user after data enlargement/reduction at step S1213 or step S1215, the enlarged or reduced character data is enlarged or reduced once more by the corresponding enlargement/reduction ratio.

After data enlargement/reduction at step S1213 or step S1215, if screen movement is requested (S1217), the portable terminal moves the screen according to the set data display format (S1219). For example, if the data display format is set as rearrangeable, the portable terminal moves the screen through scrolling or page up/down operations. If the data display format is set as non-rearrangeable, the portable terminal moves the screen through up/down/left/right cursor movement operations.

The method may further include a restoring step in which the portable terminal restores, in response to a key event for return, the initially displayed character data on the screen directly from the enlarged or reduced character data.

An exemplary embodiment of the present invention provides a display data size adjustment apparatus and method for a portable terminal wherein user data displayed on the screen can be easily and adaptively enlarged or reduced and the screen can be moved through simple manipulation to effectively display the enlarged or reduced user data, thereby enhancing user convenience in the utilization of a portable terminal.

While the present invention has been shown and described with reference to certain exemplary embodiments thereof, it will be understood by those skilled in the art that various changes in form and details may be made therein without departing from the scope of the invention as defined by the appended claims.

## Claims

1. A display data size adjustment method for a portable terminal, comprising:
displaying, in response to a request from a user, requested user data on a screen of the portable terminal;
identifying a type of the user data displayed on the screen;
controlling an data enlargement/reduction and associated screen display based on the identified type of the user data;
enlarging, in response to a request for enlargement from the user and the identified type of the user data, the displayed user data by a preset enlargement ratio and displaying the enlarged user data on the screen; and
reducing, in response to a request for reduction from the user and the identified type of the user data, the displayed user data by a preset reduction ratio and displaying the reduced user data on the screen,
wherein reducing the displayed user data comprises:
identifying a center of reduction which is a particular location of the display unit set according to user preferences; and
reducing the displayed user data with respect to the center of reduction.

2. The display data size adjustment method of claim 1, further comprising newly at least one of enlarging and reducing, in response to a key event for at least one of enlargement and reduction input after at least one of data enlargement and reduction, currently displayed user data by the at least one of preset enlargement and reduction ratio and displaying at least one of the newly enlarged and reduced user data.

3. The display data size adjustment method of claim 1, further comprising moving, in response to a new key event for screen movement after at least one of data enlargement and reduction, the screen in a direction consistent with a preset data display format and redisplaying the screen.

4. The display data size adjustment method of claim 3, wherein the moving comprises:
identifying, if screen movement is requested, a preset movement scheme;
scrolling the screen in at least one of an upward and downward direction depending upon the new key event if the movement scheme is set to 'scroll';
moving the screen in at least one of an upward, downward, left and right direction depending upon the new key event if the movement scheme is set to 'cursor movement'; and
displaying at least one of a previous and next screen page depending upon the new key event if the movement scheme is set to 'page up/down'.

5. The display data size adjustment method of claim 1, further comprising displaying, in response to a new key event for screen change after at least one of data enlargement and reduction, at least one of a previous and next screen page depending upon the new key event.

6. The display data size adjustment method of claim 5, wherein the size of the user data displayed on the screen after screen change corresponds to that of the displayed user data before screen change.

7. The display data size adjustment method of claim 1, further comprising redisplaying, in response to a new key event for return after at least one of data enlargement and reduction, enlarged or reduced user data in an initial non-enlarged and non-reduced form on the screen.

8. The display data size adjustment method of claim 1, wherein the enlarging comprises:
identifying, if a request for enlargement is issued, a preset data display format;
enlarging, if the data display format is set as non-rearrangeable, user data displayed on the screen by the enlargement ratio without rearrangement of the user data; and
enlarging, if the data display format is set as rearrangeable, user data displayed on the screen by the enlargement ratio with rearrangement of the user data,
and wherein the reducing comprises:
identifying, if a request for reduction is issued, a preset data display format;
reducing, if the data display format is set as non-rearrangeable, user data displayed on the screen by the reduction ratio without rearrangement of the user data; and
reducing, if the data display format is set as rearrangeable, user data displayed on the screen by the reduction ratio with rearrangement of the user data.

9. The display data size adjustment method of claim 8, wherein the rearrangement of the user data is performed by rearranging the user data based on at least one of the set enlargement and reduction ratio to fill the screen in sequence from the beginning.

10. The display data size adjustment method of claim 1, further comprising redisplaying, if at least one of the set enlargement and reduction ratio deviates from at least one of a preset enlargement and reduction range, at least one of the enlarged and reduced user data in an initial non-enlarged and non-reduced form on the screen.

11. The display data size adjustment method of claim 1, further comprising at least one of enlarging and reducing, if an event for at least one of an enlargement and a reduction is input through a touch screen, user data selected by at least one of a touch and drag operation and displaying at least one of the enlarged and reduced user data.

12. The display data size adjustment method of claim 1, wherein the enlarging further comprises identifying a type of currently displayed user data to enlarge the displayed user data in such a manner that the user data is not deformed for viewing; and wherein the reducing further comprises identifying a type of currently displayed user data to reduce the displayed user data in such a manner that the user data is not deformed for viewing.

13. A display data size adjustment apparatus for a portable terminal, comprising:
a key input unit (109) comprising numeric, character and function keys for inputting numeric and character information and for setting various functions;
a controller (101) for controlling, if a signal to change a mode related to at least one of data enlargement and reduction is input, a setting of a corresponding enlargement/reduction mode, and for controlling, if at least one of data enlargement and reduction events and associated screen movement events occur, operations related to the events;
a display unit (119) for displaying user data on the screen under the control of the controller in relation to data enlargement/reduction and screen movement, a window to run and set applications performing data enlargement/reduction operations, and a mode setting guide message under the control of the controller; and further comprising:
a user data determiner (123) that is arranged to identify a type of user data displayed through the display unit (119), to transmit the identified type of user data to the controller (101) and to provide to the controller (101) information on data display formats and screen movement schemes consistent with the identified data type so that the controller controls enlargement/reduction and associated screen display based on the identified type of user data,
wherein the controller (101) further configured to identify a center of reduction which is a particular location of the display unit set according to user preferences, and reduce the user data with respect to the center of reduction.

14. The display data size adjustment apparatus of claim 13, wherein the function keys include volume keys, direction keys, and associated mapped keys for at least one of enlargement and reduction of user data displayed on the screen and movement of the screen.

15. The display data size adjustment apparatus of claim 13, further comprising a memory unit (111) for storing program modules controlling data enlargement/reduction and screen movement, data resulting from execution of the program modules, and setting information on data enlargement/reduction and screen movement.

16. The display data size adjustment apparatus of claim 13, further comprising an event determiner (121) for determining whether the enlargement/reduction mode is set, and for identifying key events from the key input unit if the enlargement/reduction mode is set.

17. The display data size adjustment apparatus of claim 13, wherein the display unit (119) has a touch screen capability for generating events for at least one of data enlargement and reduction, enlarging and reducing user data selected by a touch or drag operation, and displaying the enlarged and reduced user data

## Patentansprüche

1. Anzeigedaten-Größeneinstellungs-Verfahren für ein tragbares Endgerät, das Folgendes umfasst:
Anzeigen angeforderter Benutzerdaten auf einem Bildschirm des tragbaren Endgerätes in Reaktion auf eine Anforderung von einem Benutzer;
Identifizieren einer Art der Benutzerdaten, die auf dem Bildschirm angezeigt werden;
Steuern einer Datenvergrößerung/-verkleinerung und zugeordneten Bildschirmanzeige basierend auf der identifizierten Art der Benutzerdaten;
Vergrößern der angezeigten Benutzerdaten um ein voreingestelltes Vergrößerungsverhältnis und Anzeigen der vergrößerten Benutzerdaten auf dem Bildschirm in Reaktion auf eine Anforderung von Vergrößerung vom Benutzer und der identifizierten Art der Benutzerdaten; und
Verkleinern der angezeigten Benutzerdaten um ein voreingestelltes Verkleinerungsverhältnis und Anzeigen der verkleinerten Benutzerdaten auf dem Bildschirm in Reaktion auf eine Anforderung von Verkleinerung vom Benutzer und der identifizierten Art der Benutzerdaten;
wobei Verkleinern der angezeigten Benutzerdaten Folgendes umfasst:
Identifizieren eines Verkleinerungsszentrums, das ein bestimmter Ort der Anzeigeeinheit ist, der gemäß Benutzervoreinstellungen eingestellt ist; und
Verkleinern der angezeigten Benutzerdaten in Bezug auf das Verkleinerungsszentrum.

2. Anzeigedaten-Größeneinstellungs-Verfahren nach Anspruch 1, das ferner neu mindestens eines von Vergrößern und Verkleinern gegenwärtig angezeigter Benutzerdaten um das mindestens eine voreingestellte Vergrößerungs- und Verkleinerungsverhältnis und Anzeigen mindestens einer der neu vergrößerten und verkleinerten Benutzerdaten in Reaktion auf ein Tastenereignis für mindestens einer von Vergrößerungs- und Verkleinerungseingabe nach mindestens einer von Datenvergrößerung und -verkleinerung umfasst.

3. Anzeigedaten-Größeneinstellungs-Verfahren nach Anspruch 1, das ferner Verschieben des Bildschirms in eine Richtung im Einklang mit einem voreingestellten Datenanzeigeformat und Neuanzeigen des Bildschirms in Reaktion auf ein neues Tastenereignis für Bildschirmverschiebung nach mindestens einer von Datenvergrößerung und -verkleinerung umfasst.

4. Anzeigedaten-Größeneinstellungs-Verfahren nach Anspruch 3, wobei das Verschieben Folgendes umfasst:
Identifizieren eines voreingestellten Verschiebungsschemas, wenn Bildschirmverschiebung angefordert wird;
Rollen des Bildschirms in mindestens einer von einer Aufwärts- und Abwärtsrichtung abhängig von dem neuen Tastenereignis, wenn das Verschiebungsschema auf "Rollen" eingestellt ist;
Verschieben des Bildschirms in mindestens einer von einer Aufwärts-, Abwärts-, linken und rechten Richtung abhängig von dem neuen Tastenereignis, wenn das Verschiebungsschema auf "Cursorverschiebung" eingestellt ist; und
Anzeigen mindestens einer von einer vorherigen und nächsten Bildschirmseite abhängig von dem neuen Tastenereignis, wenn das Verschiebungsschema auf "Seite nach oben/unten" eingestellt ist.

5. Anzeigedaten-Größeneinstellungs-Verfahren nach Anspruch 1, das ferner Anzeigen mindestens einer von einer vorherigen und nächsten Bildschirmseite abhängig von dem neuen Tastenereignis in Reaktion auf ein neues Tastenereignis für Bildschirmwechsel nach mindestens einer von Datenvergrößerung und -verkleinerung umfasst.

6. Anzeigedaten-Größeneinstellungs-Verfahren nach Anspruch 5, wobei die Größe der Benutzerdaten, die auf dem Bildschirm nach Bildschirmwechsel angezeigt werden, jener der angezeigten Benutzerdaten vor Bildschirmwechsel entspricht.

7. Anzeigedaten-Größeneinstellungs-Verfahren nach Anspruch 1, das ferner Neuanzeigen vergrößerter oder verkleinerter Benutzerdaten in einer anfänglichen nicht vergrößerten und nicht verkleinerten Form auf dem Bildschirm in Reaktion auf ein neues Tastenereignis für Rücksprung nach mindestens einer von Datenvergrößerung und -verkleinerung umfasst.

8. Anzeigedaten-Größeneinstellungs-Verfahren nach Anspruch 1, wobei das Vergrößern Folgendes umfasst:
Identifizieren eines voreingestellten Datenanzeigeformates, wenn eine Anforderung von Vergrößerung ausgegeben wird;
Vergrößern von Benutzerdaten, die auf dem Bildschirm angezeigt werden, um das Vergrößerungsverhältnis ohne Neuanordnung der Benutzerdaten, wenn das Datenanzeigeformat als nicht neuanordnungsfähig festgelegt ist; und
Vergrößern von Benutzerdaten, die auf dem Bildschirm angezeigt werden, um das Vergrößerungsverhältnis mit Neuanordnung der Benutzerdaten, wenn das Datenanzeigeformat als neuanordnungsfähig festgelegt ist,
und wobei das Verkleinern Folgendes umfasst:
Identifizieren eines voreingestellten Datenanzeigeformates, wenn eine Anforderung von Verkleinerung ausgegeben wird;
Verkleinern von Benutzerdaten, die auf dem Bildschirm angezeigt werden, um das Verkleinerungsverhältnis ohne Neuanordnung der Benutzerdaten, wenn das Datenanzeigeformat als nicht neuanordnungsfähig festgelegt ist; und
Verkleinern von Benutzerdaten, die auf dem Bildschirm angezeigt werden, um das Verkleinerungsverhältnis mit Neuanordnung der Benutzerdaten, wenn das Datenanzeigeformat als neuanordnungsfähig festgelegt ist.

9. Anzeigedaten-Größeneinstellungs-Verfahren nach Anspruch 8, wobei die Neuanordnung der Benutzerdaten durch Neuanordnen der Benutzerdaten basierend auf mindestens einem des eingestellten Vergrößerungs- und Verkleinerungsverhältnisses erfolgt, um den Bildschirm in Abfolge vom Anfang zu füllen.

10. Anzeigedaten-Größeneinstellungs-Verfahren nach Anspruch 1, das ferner Neuanzeigen mindestens einer der vergrößerten und verkleinerten Benutzerdaten in einer anfänglichen nicht vergrößerten und nicht verkleinerten Form auf dem Bildschirm, wenn mindestens eines des eingestellten Vergrößerungs- und Verkleinerungsverhältnisses von mindestens einem eines voreingestellten Vergrößerungs- und Verkleinerungsbereiches abweicht, umfasst.

11. Anzeigedaten-Größeneinstellungs-Verfahren nach Anspruch 1, das ferner mindestens eines von Vergrößern und Verkleinern von Benutzerdaten, die durch mindestens einen von einem Berühr- und Ziehvorgang ausgewählt werden, und Anzeigen der mindestens einen der vergrößerten und verkleinerten Benutzerdaten, wenn ein Ereignis für mindestens eine von einer Vergrößerung und einer Verkleinerung über einen Berührbildschirm eingegeben wird, umfasst.

12. Anzeigedaten-Größeneinstellungs-Verfahren nach Anspruch 1, wobei das Vergrößern ferner Identifizieren einer Art gegenwärtig angezeigter Benutzerdaten umfasst, um die angezeigten Benutzerdaten in derartiger Art und Weise zu vergrößern, dass die Benutzerdaten zum Betrachten nicht verzerrt werden; und wobei das Verkleinern ferner Identifizieren einer Art gegenwärtig angezeigter Benutzerdaten umfasst, um die angezeigten Benutzerdaten in derartiger Art und Weise zu verkleinern, dass die Benutzerdaten zum Betrachten nicht verzerrt werden.

13. Anzeigedaten-Größeneinstellungs-Vorrichtung für ein tragbares Endgerät, die Folgendes umfasst:
eine Tasteneingabeeinheit (109), die numerische, Zeichen- und Funktionstasten zum Eingeben von numerischen und Zeicheninformationen und zum Einstellen verschiedener Funktion umfasst;
eine Steuerung (101) zum Steuern einer Einstellung einer entsprechenden Vergrößerungs-/Verkleinerungsbetriebsart, wenn ein Signal eingegeben wird, um eine Betriebsart in Bezug auf mindestens eine von Datenvergrößerung und -verkleinerung zu ändern, und zum Steuern von Vorgängen in Bezug auf die Ereignisse, wenn mindestens eines von Datenvergrößerungs- und -verkleinerungereignissen und zugeordneten Bildschirmverschiebungsereignissen auftreten;
eine Anzeigeeinheit (119) zum Anzeigen von Benutzerdaten auf dem Bildschirm unter der Kontrolle der Steuerung in Bezug auf Datenvergrößerung/- verkleinerung und Bildschirmverschiebung, eines Fensters, um Anwendungen auszuführen und einzustellen, die Datenvergrößerungs-/-verkleinerungsvorgänge durchführen, und einer Betriebsarteneinstellanleitungs-Mitteilung unter der Kontrolle der Steuerung; und die ferner Folgendes umfasst:
einen Benutzerdatenermittler (123), der ausgelegt ist, eine Art von Benutzerdaten zu identifizieren, die über die Anzeigeeinheit (119) angezeigt werden, die identifizierte Art von Benutzerdaten zur Steuerung (101) zu senden und der Steuerung (101) Informationen über Datenanzeigeformate und Bildschirmverschiebungsschemata im Einklang mit der identifizierten Datenart bereitzustellen, sodass die Steuerung Vergrößerung/Verkleinerung und zugeordnete Bildschirmanzeige basierend auf der identifizierten Art von Benutzerdaten steuert,
wobei die Steuerung (101) ferner konfiguriert ist, ein Verkleinerungsszentrum zu identifizieren, das ein bestimmter Ort der Anzeigeeinheit ist, der gemäß Benutzervoreinstellungen eingestellt ist, und die angezeigten Benutzerdaten in Bezug auf das Verkleinerungsszentrum zu verkleinern.

14. Anzeigedaten-Größeneinstellungs-Vorrichtung nach Anspruch 13, wobei die Funktionstasten Lautstärketasten, Richtungstasten und zugeordnete belegbare Tasten für mindestens eine von Vergrößerung und Verkleinerung von Benutzerdaten, die auf den Bildschirm angezeigt werden, und Verschiebung der Bildschirms beinhalten.

15. Anzeigedaten-Größeneinstellungs-Vorrichtung nach Anspruch 13, die ferner eine Speichereinheit (111) zum Speichern von Programmmodulen, die Datenvergrößerung/- verkleinerung und Bildschirmverschiebung steuern, Daten, die aus Ausführung der Programmmodule resultieren, und Einstellungsinformationen über Datenvergrößerung/-verkleinerung und Bildschirmverschiebung umfasst.

16. Anzeigedaten-Größeneinstellungs-Vorrichtung nach Anspruch 13, die ferner einen Ereignisermittler (121) zum Ermitteln, ob die Vergrößerungs-/Verkleinerungsbetriebsart eingestellt ist, und zum Identifizieren von Tastenereignissen von der Tasteneingabeeinheit, wenn die Vergrößerungs-/Verkleinerungsbetriebsart eingestellt ist, umfasst.

17. Anzeigedaten-Größeneinstellungs-Vorrichtung nach Anspruch 13, wobei die Anzeigeeinheit (119) eine Berührbildschirmfähigkeit zum Erzeugen von Ereignissen für mindestens eines von Datenvergrößerung und - verkleinerung, Vergrößern und Verkleinern von Benutzerdaten, die durch einen Berühr- oder Ziehvorgang ausgewählt werden, und Anzeigen der vergrößerten und verkleinerten Benutzerdaten aufweist.

## Revendications

1. Procédé d'ajustement de taille de données d'affichage pour un terminal portable, comprenant :
l'affichage, en réponse à une demande d'un utilisateur, de données d'utilisateur demandées sur un écran du terminal portable ;
l'identification d'un type des données d'utilisateur affichées sur l'écran ;
la commande d'un agrandissement/réduction de données et d'un affichage d'écran associé sur la base du type identifié des données d'utilisateur ;
l'agrandissement, en réponse à une demande d'agrandissement de l'utilisateur et au type identifié des données d'utilisateur, des données d'utilisateur affichées par un taux d'agrandissement préréglé et l'affichage des données d'utilisateur agrandies sur l'écran ; et
la réduction, en réponse à une demande de réduction de l'utilisateur et au type identifié des données d'utilisateur, des données d'utilisateur affichées par un taux de réduction préréglé et l'affichage des données d'utilisateur réduites sur l'écran,
dans lequel la réduction des données d'utilisateur affichées comprend :
l'identification d'un centre de réduction qui est un emplacement particulier de l'unité d'affichage réglé en fonction de préférences d'utilisateur ; et
la réduction des données d'utilisateur affichées par rapport au centre de réduction.

2. Procédé d'ajustement de taille de données d'affichage selon la revendication 1, comprenant en outre nouvellement au moins l'un de l'agrandissement et de la réduction, en réponse à un événement de touche pour au moins l'une d'entrées d'agrandissement et de réduction après au moins l'un d'un agrandissement et d'une réduction de données, de données d'utilisateur actuellement affichées par l'au moins un de taux d'agrandissement et de réduction réglés et l'affichage d'au moins l'une de données d'utilisateur nouvellement agrandies et réduites.

3. Procédé d'ajustement de taille de données d'affichage selon la revendication 1, comprenant en outre le déplacement, en réponse à un nouvel événement de touche pour un mouvement d'écran après au moins l'un d'un agrandissement et d'une réduction de données, de l'écran dans un sens cohérent avec un format d'affichage de données préréglé et le réaffichage de l'écran.

4. Procédé d'ajustement de taille de données d'affichage selon la revendication 3, dans lequel le déplacement comprend :
l'identification, si un mouvement d'écran est demandé, d'un schéma de mouvement préréglé ;
le défilement de l'écran dans au moins l'un d'un sens vers le haut et d'un sens vers le bas en fonction du nouvel événement de touche si le schéma de mouvement est réglé à « défilement » ;
le déplacement de l'écran dans au moins l'un d'un sens vers le haut, d'un sens vers le bas, d'un sens vers la gauche et d'un sens vers la droite en fonction du nouvel événement de touche si le schéma de mouvement est réglé à « mouvement de curseur » ; et
l'affichage d'au moins l'une d'une page d'écran précédente et d'une page d'écran suivante en fonction du nouvel événement de touche si le schéma de mouvement est réglé à « page vers le haut/vers le bas ».

5. Procédé d'ajustement de taille de données d'affichage selon la revendication 1, comprenant en outre l'affichage, en réponse à un nouvel événement de touche pour un changement d'écran après au moins l'un d'un agrandissement et d'une réduction de données, d'au moins l'une d'une page d'écran précédente et d'une page d'écran suivante en fonction du nouvel événement de touche.

6. Procédé d'ajustement de taille de données d'affichage selon la revendication 5, dans lequel la taille des données d'utilisateur affichées sur l'écran après un changement d'écran correspond à celle des données d'utilisateur affichées avant un changement d'écran.

7. Procédé d'ajustement de taille de données d'affichage selon la revendication 1, comprenant en outre le réaffichage, en réponse à un nouvel événement de touche de retour après au moins l'un d'un agrandissement et d'une réduction de données, des données d'utilisateur agrandies ou réduites dans une forme initiale non agrandie et non réduite sur l'écran.

8. Procédé d'ajustement de taille de données d'affichage selon la revendication 1, dans lequel l'agrandissement comprend :
l'identification, si une demande d'agrandissement est émise, d'un format d'affichage de données préréglé ;
l'agrandissement, si le format d'affichage de données est réglé comme ne pouvant pas être réaménagé, des données d'utilisateur affichées sur l'écran par le taux d'agrandissement sans réaménagement des données d'utilisateur ; et
l'agrandissement, si le format d'affichage de données est réglé comme pouvant être réaménagé, des données d'utilisateur affichées sur l'écran par le taux d'agrandissement avec réaménagement des données d'utilisateur,
et dans lequel la réduction comprend :
l'identification, si une demande de réduction est émise, d'un format d'affichage de données préréglé ;
la réduction, si le format d'affichage de données est réglé comme ne pouvant pas être réaménagé, des données d'utilisateur affichées sur l'écran par le taux de réduction sans réaménagement des données d'utilisateur; et
la réduction, si le format d'affichage de données est réglé comme pouvant être réaménagé, des données d'utilisateur affichées sur l'écran par le taux de réduction avec réaménagement des données d'utilisateur.

9. Procédé d'ajustement de taille de données d'affichage selon la revendication 8, dans lequel le réaménagement de données d'utilisateur est effectué par le réaménagement des données d'utilisateur sur la base d'au moins l'un du taux d'agrandissement réglé et du taux de réduction réglé pour remplir l'écran en séquence depuis le début.

10. Procédé d'ajustement de taille de données d'affichage selon la revendication 1, comprenant en outre le réaffichage, si au moins l'un du taux d'agrandissement réglé et du taux de réduction réglé s'écarte d'au moins l'une d'une plage d'agrandissement préréglée et d'une plage de réduction préréglée, d'au moins l'une des données d'utilisateur agrandies et réduites dans une forme initiale non agrandie et non réduite sur l'écran.

11. Procédé d'ajustement de taille de données d'affichage selon la revendication 1, comprenant en outre au moins l'un de l'agrandissement et de la réduction, si un événement pour au moins l'un d'un agrandissement et d'une réduction est entré par l'intermédiaire d'un écran tactile, de données d'utilisateur sélectionnées par au moins l'une d'une opération de toucher et d'une opération de glissement et l'affichage d'au moins l'une des données d'utilisateur agrandies et réduites.

12. Procédé d'ajustement de taille de données d'affichage selon la revendication 1, dans lequel l'agrandissement comprend en outre l'identification d'un type de données d'utilisateur actuellement affichées pour agrandir les données d'utilisateur affichées de telle manière que les données d'utilisateur ne soient pas déformées pour leur visualisation ; et dans lequel la réduction comprend en outre l'identification d'un type de données d'utilisateur actuellement affichées pour réduire les données d'utilisateur affichées de telle manière que les données d'utilisateur ne soient pas déformées pour leur visualisation.

13. Appareil d'ajustement de taille de données d'affichage pour un terminal portable, comprenant :
une unité d'entrée de touche (109) comprenant des touches de chiffres, de caractères et de fonctions pour entrer des informations numériques et de caractères et pour régler diverses fonctions ;
un organe de commande (101) pour commander, si un signal de changement d'un mode relatif à au moins l'un d'un agrandissement de données et d'une réduction de données est entré, un réglage d'un mode d'agrandissement/réduction correspondant, et pour commander, si au moins l'un d'événements d'agrandissement et de réduction de données et des événements de mouvement d'écran associés se produisent, des opérations relatives aux événements ;
une unité d'affichage (119) pour afficher des données d'utilisateur sur l'écran sous le contrôle de l'organe de commande en relation avec un agrandissement/réduction de données et un mouvement d'écran, une fenêtre pour exécuter et régler des applications effectuant des opérations d'agrandissement/réduction de données, et un message de guide de réglage de mode sous le contrôle de l'organe de commande ; et comprenant en outre :
un déterminateur de données d'utilisateur (123) qui est agencé pour identifier un type de données d'utilisateur affichées par l'intermédiaire de l'unité d'affichage (119), transmettre le type identifié de données d'utilisateur à l'organe de commande (101) et fournir, à l'organe de commande (101), des informations sur les formats d'affichage de données et les schémas de mouvement d'écran cohérents avec le type de données identifié de sorte que l'organe de commande commande l'agrandissement/la réduction et l'affichage d'écran associé sur la base du type identifié de données d'utilisateur,
dans lequel l'organe de commande (101) est en outre configuré pour identifier un centre de réduction qui est un emplacement particulier de l'unité d'affichage réglé en fonction de préférences d'utilisateur, et réduire les données d'utilisateur par rapport au centre de réduction.

14. Appareil d'ajustement de taille de données d'affichage selon la revendication 13, dans lequel les touches de fonctions comprennent des touches de volume, des touches de sens, et des touches mappées associées pour au moins l'un d'un agrandissement et d'une réduction de données d'utilisateur affichées sur l'écran et un mouvement de l'écran.

15. Appareil d'ajustement de taille de données d'affichage selon la revendication 13, comprenant en outre une unité de mémoire (111) pour mémoriser des modules de programmes commandant un agrandissement/réduction de données et un mouvement d'écran, des données découlant d'une exécution des modules de programmes, et des informations de réglage sur un agrandissement/réduction de données et un mouvement d'écran.

16. Appareil d'ajustement de taille de données d'affichage selon la revendication 13, comprenant en outre un déterminateur d'événement (121) pour déterminer si le mode d'agrandissement/réduction est réglé, et pour identifier des événements de touche à partir de l'unité d'entrée de touche si le mode d'agrandissement/réduction est réglé.

17. Appareil d'ajustement de taille de données d'affichage selon la revendication 13, dans lequel l'unité d'affichage (119) comporte une capacité d'écran tactile pour générer des événements pour au moins l'un d'un agrandissement de données et d'une réduction de données, agrandir et réduire des données d'utilisateur sélectionnées par une opération de toucher ou de glissement, et afficher les données d'utilisateur agrandies et réduites.
